(19) Europäisches Patentamt
European Patent Office
Office européen des brevets

(11) **EP 4 216 351 A1**

(12) **EUROPEAN PATENT APPLICATION**
published in accordance with Art. 153(4) EPC

(43) Date of publication:
**26.07.2023 Bulletin 2023/30**

(21) Application number: **21896167.0**

(22) Date of filing: **08.05.2021**

(51) International Patent Classification (IPC):
***H01M 50/244*** (2021.01)

(52) Cooperative Patent Classification (CPC):
**H01M 50/227; H01M 50/231; H01M 50/242;
H01M 50/244; H01M 50/249; H01M 50/258**

(86) International application number:
**PCT/CN2021/092464**

(87) International publication number:
**WO 2022/110652 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.11.2020 CN 202011346094**

(71) Applicant: **BYD Company Limited
Shenzhen, Guangdong 518118 (CN)**

(72) Inventors:
• **WANG, Yongnan
Shenzhen, Guangdong 518118 (CN)**
• **CHEN, Hua
Shenzhen, Guangdong 518118 (CN)**
• **ZHENG, Weixin
Shenzhen, Guangdong 518118 (CN)**
• **LIAO, Zhengyuan
Shenzhen, Guangdong 518118 (CN)**

(74) Representative: **Arnold & Siedsma
Bezuidenhoutseweg 57
2594 AC The Hague (NL)**

(54) **BATTERY TRAY, BATTERY PACK, AND ELECTRIC VEHICLE**

(57) A battery tray (10), a battery pack, and an electric vehicle are provided. The battery tray (10) includes a tray body (100), a first protection plate (300), and a second protection plate (200). The first protection plate (300) includes an energy-absorbing plate (302) and high-strength plates (301) located on two sides of the energy-absorbing plate (302), and the energy-absorbing plate (302) is in a cellular structure. A wave impedance value of the second protection plate (200) is less than a wave impedance value of the high-strength plate.

FIG. 1

EP 4 216 351 A1

## Description

### CROSS REFERENCE TO RELATED APPLICATIONS

The present disclosure claims priority to Chinese Patent Application No. 202011346094.X, filed on November 25, 2020 and entitled "BATTERY TRAY, BATTERY PACK, AND ELECTRIC VEHICLE". The entire content of the above-referenced application is incorporated herein by reference.

### FIELD

The present disclosure relates to the field of battery technologies, and specifically, to a battery tray, a battery pack, and an electric vehicle.

### BACKGROUND

With the development of electric vehicles, safety requirements of a user on an electric vehicle are increasingly high. An existing battery pack of the electric vehicle is generally placed at a bottom portion of the electric vehicle, a bottom tray of the battery pack may be easily bumped during movement, and a battery cell is further damaged. Therefore, a bottom portion of the tray needs to be protected. However, in the related art, a battery tray protection capability is still weak, and the battery pack cannot be effectively protected.

### SUMMARY

A technical problem to be resolved by the present disclosure is to provide a battery tray, a battery pack, and an electric vehicle for the problem that the battery pack cannot be effectively protected due to a weak battery tray protection capability in the related art.

To resolve the foregoing technical problem, the present disclosure provides a battery tray. The battery tray includes a tray body. The tray body includes a tray bottom plate and a tray side beam located on the tray bottom plate, and the tray side beam and the tray bottom plate enclose to form a battery accommodating cavity for accommodating a battery module or a cell.

The battery tray includes a first protection plate. The first protection plate includes an energy-absorbing plate and high-strength plates located on two sides of the energy-absorbing plate, the energy-absorbing plate is in a cellular structure, and the first protection plate is fixed onto the tray bottom plate.

The battery tray further includes a second protection plate. One side of the second protection plate is connected to the first protection plate, the other side is connected to the tray body, and a wave impedance value of the second protection plate is less than a wave impedance value of the high-strength plate.

In an embodiment of the present disclosure, a material of the high-strength plate is PP glass fiber, resin glass fiber, or base fabric; and a material of the energy-absorbing plate is PP, PE, or metal.

In an embodiment of the present disclosure, a material of the second protection plate is a foaming material.

In an embodiment of the present disclosure, the material of the second protection plate is polyurethane.

In an embodiment of the present disclosure, the second protection plate is provided with a plurality of spaced through holes, a length of each of the spaced through holes ranges from 0 mm to 100 mm, and a distance between two adjacent spaced through holes ranges from 50 mm to 100 mm.

In an embodiment of the present disclosure, the length of each of the spaced through holes ranges from 25 mm to 50 mm.

In an embodiment of the present disclosure, a side of the tray bottom plate away from the tray side beam is provided with a bottom plate groove, and the second protection plate is arranged in the bottom plate groove.

In an embodiment of the present disclosure, one side of the second protection plate is bonded to the bottom plate groove of the tray bottom plate, and the other side is bonded to the first protection plate; and
the first protection plate covers the bottom plate groove and is fixed onto the tray bottom plate.

In a second aspect, the present disclosure provides a battery pack. The battery pack includes the battery tray described above and a plurality of battery modules or cells, and the plurality of battery modules or cells are located in the battery accommodating cavity.

In a third aspect, the present disclosure provides an electric vehicle, and the electric vehicle includes the battery pack described above.

Beneficial effects of the present disclosure are as follows: Two protection plates, namely, a first protection plate and a second protection plate are arranged in a battery tray of the present disclosure. The first protection plate includes an energy-absorbing plate and high-strength plates located on two sides of the energy-absorbing plate, and the energy-absorbing plate is in a cellular structure. A wave impedance value of the second protection plate is less than a wave impedance value of the high-strength plate. In the present disclosure, through structures of the first protection plate and the second protection plate and parameter limitations, an anti-impact capability of the battery tray can be further improved, influence of external impact on a battery module can be reduced, and the safety of a battery pack can be improved.

## BRIEF DESCRIPTION OF THE DRAWINGS

FIG. 1 is an exploded view of a battery tray according to an embodiment of the present disclosure.
FIG. 2 is a structural exploded view of a first protection plate of a battery tray according to an embodiment of the present disclosure.
FIG. 3 is a schematic structural diagram of a second protection plate of a battery tray according to an embodiment of the present disclosure.
FIG. 4a is a schematic diagram of a second protection plate of a battery tray according to another embodiment of the present disclosure.
FIG. 4b is a schematic diagram of a second protection plate of a battery tray according to another embodiment of the present disclosure.
FIG. 5 is an exploded view of a battery tray from another perspective according to an embodiment of the present disclosure.
FIG. 6 is a schematic diagram of an external object impacting a battery tray according to an embodiment of the present disclosure.

The reference numerals in the specification are as follow:

1. Battery pack;
10. Battery tray;
100. Tray body; 101. Tray bottom plate; 1011. Bottom plate groove; 102. Tray side beam;
200. Second protection plate; 201. Spaced through hole;
300. First protection plate; 301. High-strength plate; 302. Energy-absorbing plate;
20. Battery module; and
30. External object.

## DETAILED DESCRIPTION

Detailed description of the embodiments of present disclosure will be made in the following, and examples thereof are illustrated in the accompanying drawings, and same or similar reference numerals in all the accompanying drawings indicate same or similar components or components having same or similar functions. The embodiments described below with reference to the accompanying drawings are exemplary, and are intended to explain the present disclosure and cannot be construed as a limitation on the present disclosure.

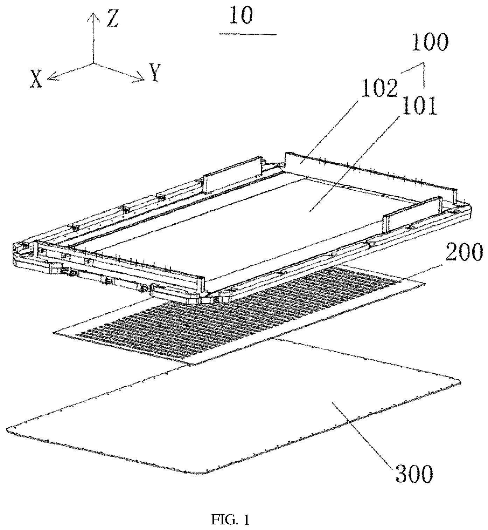

According to a first aspect, the present disclosure provides a battery tray 10. As shown in FIG. 1 to FIG. 6, the battery tray 10 includes a tray body 100, a first protection plate 300, and a second protection plate 200. The tray body 100 includes a tray bottom plate 101 and a tray side beam 102 located on the tray bottom plate 101, and the tray side beam 102 and the tray bottom plate 101 enclose to form a battery accommodating cavity for accommodating a battery module 20 or a cell. One side of the second protection plate 200 is connected to the tray body 100, and the other side is connected to the first protection plate 300. The first protection plate 300 includes an energy-absorbing plate 302 and high-strength plates 301 located on two sides of the energy-absorbing plate 302, the energy-absorbing plate 302 is in a cellular structure, and the first protection plate 300 is fixed onto the tray bottom plate 101. A wave impedance value of the second protection plate 200 is less than a wave impedance value of the high-strength plate 301. In the present disclosure, protection plates with different wave impedance values and structures are used, and it is defined that the wave impedance value of the second protection plate 200 is less than the wave impedance value of the high-strength plate 301 of the first protection plate 300. Therefore, when the battery tray 10 is impacted by an obstacle, impact to the battery module 20 in the battery tray 10 can be reduced, thereby improving the anti-impact capability of the battery tray 10.

Specifically, based on a principle of stress wave propagation, when an object is under an action of impact energy generated by an impact load, transverse stress wave propagation and longitudinal stress wave propagation are generated on a surface of the object to gradually propagate the impact energy from near to far. In a single material medium object, a stress wave generated by the impact energy is divided into transverse propagation and longitudinal propagation. When the surface of the object is impacted by an external object, an impact stress wave is propagated in a direction perpendicular to an impact force (namely, transverse propagation). A higher propagation speed of the stress wave indicates a higher spread speed of the impact energy in this direction, and spread of the impact energy at an impact point is converted from point spreading to surface spreading. When the surface of the object is impacted by the external object, the impact stress wave is propagated in a direction parallel to the impact force (namely, longitudinal propagation). The propagation is gradually attenuated as an increase in a propagation distance, a greater thickness of a material indicates a better protection effect, and the essence of propagation of the impact stress wave in the material is propagation of vibration of particles of the material led out by the external force from far to near. Damping of the material causes attenuation of the vibration of the particles of the material, and the propagation of the stress wave in the material is attenuated, and the material has a good anti-vibration capability. Further, greater damping of the material indicates greater attenuation of propagation of the stress wave.

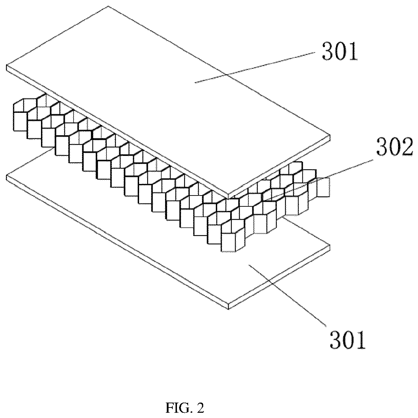

Therefore, based on the foregoing principle, in the present disclosure, the protection plates of the battery tray 10 are divided into two types of protection plates, namely, the first protection plate 300 and the second protection plate 200. As shown in FIG. 2, the first protection plate 300 includes an energy-absorbing plate 302 and high-strength plates 301 located on two sides of the energy-absorbing plate 302. In the present disclosure, an outermost protection plate of the battery tray 10 is designed to the first protection plate 300 in a "sandwich structure", a protection capability of an outermost layer of the battery tray 10 can be improved, costs and a weight of the tray can be further reduced, and energy density of a battery pack 1 can be improved. As can be known from the principle of stress wave propagation in an object, in the present disclosure, the anti-impact capability and protection capability of the protection plate are improved by limiting the structure of the first protection plate 300. In the structure design that the first protection plate 300 is designed to a "sandwich structure", namely, the high-strength plate 301, the energy-absorbing plate 302, and the high-strength plate 301, the outermost high-strength plate and the innermost high-strength plate 301 can reduce transverse propagation of the impact stress wave, the intermediate energy-absorbing plate 302 can further increase the entire thickness of the first protection plate 300 to further limit propagation of the impact stress wave, and the intermediate energy-absorbing plate 302 is designed to be cellular to further attenuate the impact. Specifically, the intermediate energy-absorbing plate 302 is designed to be cellular, causing the energy-absorbing plate 302 to have a strong deformation capability. When the impact stress wave is propagated from the high-strength plate 301 to the energy-absorbing plate 302, the cellular energy-absorbing plate 302 is deformed due to propagated impact of the impact stress wave, absorbs energy of the impact stress wave, and accelerates propagation attenuation of the impact stress wave.

In an embodiment of the present disclosure, it is defined that the wave impedance value of the second protection plate 200 is less than the wave impedance value of the high-strength plate 301. In an embodiment of the present disclosure, the mentioned wave impedance value is related to a density of a material and a propagation speed of a stress wave in the material. A calculation formula thereof is: $\sigma = \rho \times C$; where $\sigma$ represents a wave impedance value of a medium (material); $\rho$ represents a density of the medium (material); and $C$ represents a propagation speed of a stress wave in the medium (material). When the impact stress wave runs through a material (incident medium) with high wave impedance into a material (transmission medium) with low wave impedance, a ratio of the wave impedance of the incident medium to the wave impedance of the transmission medium is n. Incident and transmission principles of the stress wave on different medium surfaces are as follows:

$$\sigma_R = F\sigma_1 \qquad \text{----------------------------------------------(Formula 1)}$$

$$v_R = -Fv_1 \qquad \text{---------------------------------------------(Formula 2)}$$

$$\sigma_T = T\sigma_1 \qquad \text{----------------------------------------------(Formula 3)}$$

$$v_T = nTv_1 \qquad \text{----------------------------------------------(Formula 4)}$$

In the foregoing formulas, n, F, and T are calculated according to the following formulas.

$$n = (\rho_1 C_1)_1 / (\rho_2 C_2)_2 \text{----------------------------------------------(Formula 5)}$$

$$F = \frac{1-n}{1+n} \qquad \text{----------------------------------------(Formula 6)}$$

$$T = \frac{2}{1+n} \qquad \text{-----------------------------------------(Formula 7)}$$

$(\rho_1 C_1)_1$ is a wave impedance value of the incident medium; $(\rho_2 C_2)_2$ is a wave impedance value of the transmission medium; a ratio of the two values is n; F is a reflection coefficient, and T is a transmission coefficient; $\sigma_1$ is a stress value of an incident wave; $\sigma_T$ is a wave stress value of a transmission wave; and $\sigma_R$ is a stress value of a reflected wave.

As can be known from Formula 1 to Formula 7, when the wave impedance ratio n is greater than 1, namely, when the wave impedance of the incident medium is greater than the wave impedance of the transmission medium, the reflection coefficient F is negative, which indicates that a reflected wave of the incident medium and the incident wave are in reverse directions, and the incident medium reflects a part of the stress value. When the transmission coefficient T is less than 1, it indicates that the stress value of the transmission wave is less than the stress value of the incident wave, and a larger value of n indicates a smaller stress value of the transmission wave. Therefore, when the stress wave is propagated from a medium with a large wave impedance value to a medium with a small wave impedance value, the stress wave propagated into the medium with a small wave impedance value becomes smaller. Therefore, In an embodiment of the present disclosure, by defining that the wave impedance value of the high-strength plate 301 is greater than the wave impedance value of the second protection plate 200, after an external object 30 impacts the battery tray 10, it is ensured that propagation of the stress wave can be further reduced.

As can be known from the embodiments of the present disclosure, in the present disclosure, the first protection plate 300 is arranged, and the structure of the first protection plate 300 is designed to a "sandwich structure", namely, the high-strength plate 301, the energy-absorbing plate 302, and the high-strength plate 301, and spreading of the impact stress wave can be preferentially reduced. In addition, the structure of the energy-absorbing plate 302 is designed to a "cellular" structure, thereby further improving absorption of the first protection plate 300 for the impact stress wave of the external object 30. When the impact stress wave of the external object 30 impacting the battery tray 10 runs through the first protection plate 300, the residual impact stress wave can be further reduced after being spread to the second protection plate 200. In addition, the second protection plate 200 has a specific thickness, and propagation of the impact stress wave can be further reduced after the impact stress wave is propagated to the battery module 20. Therefore, influence of the external impact to the battery module 20 is reduced layer by layer. Compared with the battery tray 10 in the related art, the battery tray 10 In an embodiment of the present disclosure can achieve a better protection effect when impacted by the external object 30.

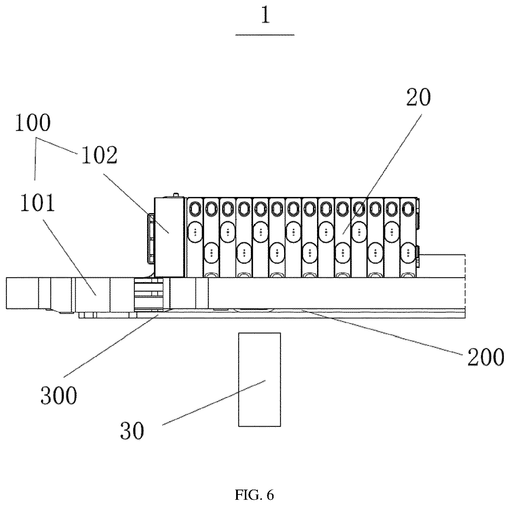

In an embodiment of the present disclosure, as shown in FIG. 6, when the battery tray 10 is impacted by a foreign object from the bottom portion, a transmission direction of an impact stress is: the high-strength plate 301→the energy-absorbing plate 302→the high-strength plate 301→the second protection plate 200. First, the high-strength plate 301 has specific hardness and toughness, causing the surface of the first protection plate 300 to be not damaged. The energy-absorbing plate 302 is then deformed to absorb energy, the next layer of high-strength plate 301 prevents the first protection plate 300 from being penetrated, and the second protection plate 200 finally can spread remaining energy of energy at a point in a form of a stress wave. In this way, energy at a local point can be spread to a large surface, thereby reducing maximum deformation of the tray and protecting a battery cell.

Further, In an embodiment of the present disclosure, a material of the high-strength plate 301 is at least one of PP glass fiber, resin glass fiber, or base fabric. A material of the energy-absorbing plate 302 is at least one of PP, PE, or metal. According to the present disclosure, the strength and protection capability of the battery tray 10 are further improved by limiting the materials of the high-strength plate 301 and the energy-absorbing plate 302. Specifically, when the material of the high-strength plate 301 is PP glass fiber (or may be another material described above), the PP glass fiber layer plays a function of preventing the PP glass fiber plate from being penetrated when the first protection plate 300 is impacted.

Further, In an embodiment of the present disclosure, a material of the second protection plate 200 is a foaming material. An objective of selecting the foaming material lies in that a plurality of pores are provided inside the material, and a texture of the material is softer than that of metal. Therefore, when the material is impacted, an impact force is spread in a form of a stress wave to spread the force. Optionally, the material of the second protection plate 200 is polyurethane.

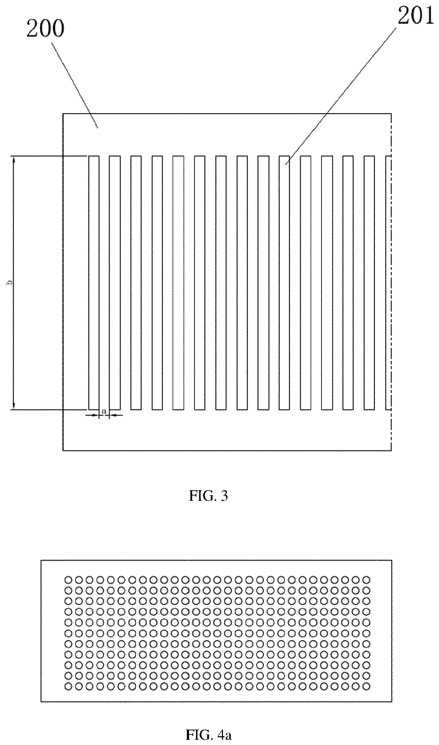

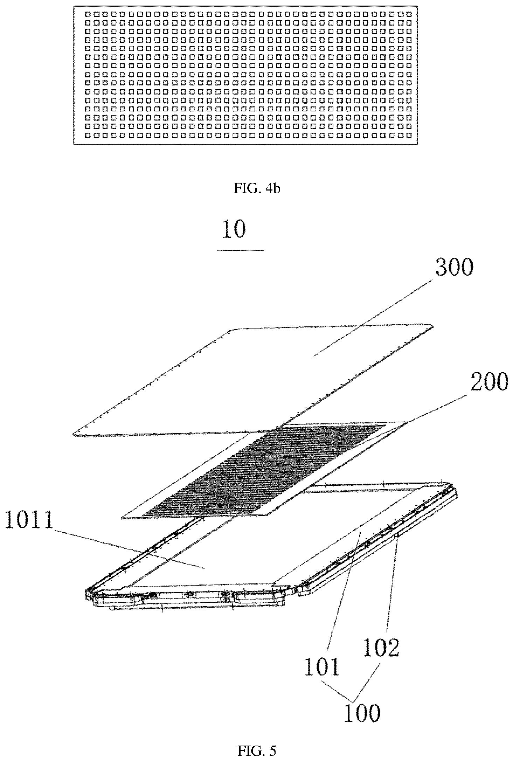

In an embodiment of the present disclosure, to further reduce costs of the battery tray 10, a lightweight battery tray 10 is implemented. The second protection plate 200 is provided with a plurality of spaced through holes 201, a length of each of the spaced through holes 201 ranges from 0 mm to 100 mm, and a distance between two adjacent spaced through holes 201 ranges from 50 mm to 100 mm. Specifically, as shown in FIG. 3, a length b of each of the spaced through holes 201 ranges from 0 mm to 100 mm, and a distance a between two adjacent spaced through holes 201 ranges from 50 mm to 100 mm. A direction of the length of spaced through hole 201 is not specifically limited and a shape of the spaced through hole 201 is also not limited. As shown in FIG. 3, FIG. 4a, and FIG. 4b, the spaced through hole 201 may be in a shape of a rectangle, a square, or a circle. In addition, a quantity of the spaced through holes 201 is also not limited. By providing the spaced through holes 201 in the second protection plate 200, and limiting the length and arrangement positions of the spaced through holes 201 (namely, limiting the distance between two adjacent spaced through holes 201), the bottom protection requirement of the battery tray 10 on the second protection plate 200 is implemented, and costs of the second protection plate 200 is further reduced, thereby implementing a lightweight design of the battery tray 10.

In addition, providing the spaced through holes 201 in the second protection plate 200 can further improve the protection capability of the battery tray 10. Specifically, when the second protection plate 200 is provided with the plurality of spaced through holes 201 provided at intervals, after the external object impacts the first protection plate 300, if a stress propagated from the first protection plate 300 to the second protection plate 200 is exactly located in the spaced through holes 201, since no medium is in the spaced through holes 201, the impact stress may be spread to the second protection plate 200 on two sides of the spaced through holes 201, namely, spread from one stress propagation point to two stress propagation surfaces, thereby improving the propagation efficiency of the stress wave and improving the protection capability of the battery tray 10. In the related art, in the battery tray 10, the stress wave is spread from one force bearing point to one force bearing surface. In an embodiment of the present disclosure, by providing the spaced through holes 201 in the second protection plate 200, the stress wave is spread from one force bearing point to two force bearing surfaces, thereby improving the efficiency of transverse propagation of the stress wave in the second protection plate 200, and further improving the protection capability of the battery tray 10.

To further improve the protection capability of the second protection plate 200, the second protection plate 200 defines that the length b of the spaced through hole 201 ranges from 25 mm to 50 mm. Specifically, as can be seen from a ball strike test performed on the battery tray 10 In an embodiment of the present disclosure (ball strike test: an impact head with a diameter $\varphi$ of 20 mm and a weight of 10 kg is used to strike an external object at a speed of 5 m/s to impact the second protection plate 200), it is indicated through data of the test that, after the battery tray 10 is provided with the second protection plate 200 with the foregoing spaced through holes, a recess of the battery tray 10 after the ball strike test is small and hard to measure. A recess of a battery tray 10 without a groove is 2.1 mm. As can be known from the above, after the spaced through holes 201 with the predetermined gap are provided in the second protection plate 200, the protection capability of the second protection plate is further improved, and the lightweight design of the battery tray 10 is implemented and the energy density of the battery pack 1 is improved.

In an embodiment of the present disclosure, as shown in FIG. 5, the tray body 100 includes a tray bottom plate 101. The tray bottom plate 101 is provided with a bottom plate groove 1011, and the second protection plate 200 is arranged in the bottom plate groove 1011. In addition, the second protection plate 200 and the first protection plate 300 may be connected to the tray body 100 through an adhesive. Specifically, one side of the second protection plate 200 is bonded to the bottom plate groove 1011 of the tray bottom plate 101, and the other side of the second protection plate 200 is bonded to the first protection plate 300. In an embodiment of the present disclosure, if connection is performed through an insulating adhesive, the second protection plate 200 and the first protection plate 300 may be connected to the tray body 100 in a better manner, and the protection capability of the battery tray 10 can also be improved, thereby effectively alleviating the impact force on the tray and further reducing influence on the battery module 20 or the cell. In an embodiment of the present disclosure, arranging the second protection plate 200 in the groove of the battery tray 10 further implements the lightweight design of the battery tray 10. Further, the first protection plate 300 covers the bottom plate groove 1011 and is fixed onto the tray bottom plate 101 through rivets.

According to a second aspect, the present disclosure discloses a battery pack 1. The battery pack 1 includes the battery tray 10 described above and a plurality of battery modules 20 or cells, and the plurality of battery modules 20 or cells are located in the battery accommodating cavity.

According to a third aspect, the present disclosure discloses an electric vehicle, and the electric vehicle is provided with the battery pack 1 described above.

In the description of the present disclosure, it should be understood that, orientation or position relationships indicated by terms such as "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial", and "circumferential" are orientation or position relationship shown based on the accompanying drawings, and are merely used for describing the present disclosure and simplifying the description, rather than indicating or implying that the indicated apparatus or element should have a particular orientation or be constructed and operated in a particular orientation, and therefore, should not be construed as a limitation on the present disclosure.

In addition, the terms "first" and "second" are used merely for the purpose of description, and shall not be construed as indicating or implying relative importance or implying a quantity of indicated technical features. Therefore, a feature defined by "first" or "second" may explicitly indicate or implicitly include at least one of the features. In the description of the present disclosure, "a plurality of" means at least two, for example, two, three, and the like, unless otherwise explicitly and specifically defined.

In the present disclosure, unless otherwise explicitly specified and defined, terms such as "mounted", "connected", "fixed" should be understood in broad sense. For example, the connection may be a fixed connection, a detachable connection, or an integral connection; or the connection may be a mechanical connection or an electrical connection; or the connection may be a direct connection, an indirect connection through an intermediary, or internal communication between two elements or mutual action relationship between two elements, unless otherwise specified explicitly. The specific meanings of the above terms in the present disclosure may be understood according to specific circumstances for a person of ordinary skill in the art.

In the description of this specification, the description of reference terms such as "one embodiment", "some embodiments", "example", "specific example", or "some examples" means that specific features, structures, materials, or characteristics described in combination with the embodiment or example are included in at least one embodiment or example of the present disclosure. In this specification, exemplary description of the foregoing terms does not necessarily refer to a same embodiment or example. Besides, the specific features, structures, materials, or characteristics that are described may be combined in proper manners in any one or more embodiments or examples. In addition, a person skilled in the art may integrate or combine different embodiments or examples described in this specification and features of the different embodiments or examples provided that they are not contradictory to each other.

Although the embodiments of the present disclosure have been shown and described above, it may be understood that the above embodiments are exemplary and should not be construed as a limitation on the present disclosure, and a person of ordinary skill in the art may make changes, modifications, replacements, and variations to the above embodiments within the scope of the present disclosure.

**Claims**

1.  A battery tray comprising:

    a tray body, wherein the tray body comprises a tray bottom plate and a tray side beam located on the tray bottom plate, and the tray side beam and the tray bottom plate enclose to form a battery accommodating cavity for accommodating a battery module or a cell;
    a first protection plate, wherein the first protection plate comprises an energy-absorbing plate and high-strength plates located on two sides of the energy-absorbing plate, the energy-absorbing plate is in a cellular structure, and the first protection plate is fixed onto the tray bottom plate; and
    a second protection plate, wherein one side of the second protection plate is connected to the first protection plate, the other side is connected to the tray body, and a wave impedance value of the second protection plate is less than a wave impedance value of the high-strength plate.

2.  The battery tray according to claim 1, wherein a material of the high-strength plate is PP glass fiber, resin glass fiber, or base fabric; and a material of the energy-absorbing plate is PP, PE, or metal.

3.  The battery tray according to claim 1, wherein a material of the second protection plate is a foaming material.

4.  The battery tray according to claim 3, wherein the material of the second protection plate is polyurethane.

5.  The battery tray according to any one of claims 1 to 4, wherein the second protection plate is provided with a plurality of spaced through holes, a length of each of the spaced through holes ranges from 0 mm to 100 mm, and a distance between two adjacent spaced through holes ranges from 50 mm to 100 mm.

6.  The battery tray according to claim 5, wherein the length of each of the spaced through holes ranges from 25 mm to 50 mm.

7.  The battery tray according to any one of claims 1 to 6, wherein a side of the tray bottom plate away from the tray side beam is provided with a bottom plate groove, and the second protection plate is arranged in the bottom plate groove.

8.  The battery tray according to claim 7, wherein one side of the second protection plate is bonded to the bottom plate groove of the tray bottom plate, and the other side is bonded to the first protection plate; and
    the first protection plate covers the bottom plate groove and is fixed onto the tray bottom plate.

9.  A battery pack, comprising: the battery tray according to any one of claims 1 to 8 and a plurality of battery modules or cells, wherein the plurality of battery modules or cells are located in the battery accommodating cavity.

10. An electric vehicle, comprising the battery pack according to claim 9.

FIG. 1

FIG. 2

200

201

FIG. 3

FIG. 4a

FIG. 4b

10

300

200

1011

101

102

100

FIG. 5

1

100

102

20

101

300

30

200

FIG. 6

<table>
<tr><td colspan="2" align="center">**INTERNATIONAL SEARCH REPORT**</td><td>International application No.<br>**PCT/CN2021/092464**</td></tr>
</table>

**A. CLASSIFICATION OF SUBJECT MATTER**

H01M 50/244(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 托盘, 波阻抗, 防护, 保护, 减震, 减振, 缓冲, 吸能, 防撞, 层, 板, battery, tray, wave, impedance, guard, protect, damping, absorption, endergonic, crashworthy, layer, plate

**C. DOCUMENTS CONSIDERED TO BE RELEVANT**

| Category* | Citation of document, with indication, where appropriate, of the relevant passages | Relevant to claim No. |
|---|---|---|
| Y | CN 109216605 A (BYD COMPANY LTD.) 15 January 2019 (2019-01-15)<br>description paragraphs [0052]-[0063], [0090]-[0116], figures 1-11 | 1-10 |
| Y | CN 104647823 A (52 INSTITUTE OF CHINA NORTH INDUSTRIES GROUP) 27 May 2015 (2015-05-27)<br>description, paragraphs [0005]-[0022], and figure 1 | 1-10 |
| Y | CN 210821795 U (ANHUI XINHUA UNIVERSITY) 23 June 2020 (2020-06-23)<br>description, paragraphs [0020]-[0028], and figure 1 | 5-6 |
| Y | CN 109216601 A (BYD COMPANY LTD.) 15 January 2019 (2019-01-15)<br>description, paragraphs [0036]-[0102], and figures 1-10 | 1-10 |
| A | CN 208489252 U (SHENZHEN DENZA NEW ENERGY AUTOMOTIVE CO., LTD.) 12 February 2019 (2019-02-12)<br>entire document | 1-10 |

☐ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **27 July 2021** | **23 August 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/092464**

| Patent document cited in search report | | | Publication date (day/month/year) | Patent family member(s) | | | Publication date (day/month/year) |
|---|---|---|---|---|---|---|---|
| CN | 109216605 | A | 15 January 2019 | CN | 109216605 | B | 25 December 2020 |
| CN | 104647823 | A | 27 May 2015 | CN | 104647823 | B | 18 January 2017 |
| CN | 210821795 | U | 23 June 2020 | None | | | |
| CN | 109216601 | A | 15 January 2019 | CN | 109216601 | B | 25 December 2020 |
| CN | 208489252 | U | 12 February 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011346094X